# EUROPEAN PATENT APPLICATION

(11) **EP 1 770 556 A2**
(43) Date of publication of application: **04.04.2007**
(21) Application number: 06121411.0
(22) Date of filing: 28.09.2006
(51) Int. Cl.: G06F 17/30

(54) **Method And Apparatus For Publishing Content Through Blog**

(30) Priority: 30.09.2005 KR 20050092134
(71) Applicant: SAMSUNG ELECTRONICS CO., LTD., Suwon-si, Gyeonggi-do (KR)
(72) Inventor: YOON, Seok-hyun, Seoul (KR); RYU, Won-ho, Seoul (KR); WOO, Kyoung-gu, Seoul (KR)
(74) Representative: Robinson, Ian Michael

(57) **Abstract**

Provided are a method and apparatus for publishing content through a blog. A publisher terminal (700) publishes content and metadata of the content to a blog and transmits a rich site summary (RSS) including information on the published content from a web server (800) for managing the blog to a RSS client (900) and a publisher terminal (700). Thus, the content and the metadata can be shared through the blog, and metadata of local content of a publisher and the RSS client (900) and metadata of content of the web server (800) for managing the blog can be synchronized.

## Description

The present invention relates to a method of sharing content using a blog, and more particularly, to a method of sharing digital content with a rich site summary (RSS)client using a RSS.

Recently, a blog, which is created by an individual for publishing information and allowing other persons to share the information, has been spotlighted as an information sharing method. In addition, a rich site summary (RSS) service, which transmits blog summary information including information of a new post when the new post is published even though other persons have not visted the blog, is being introduced.

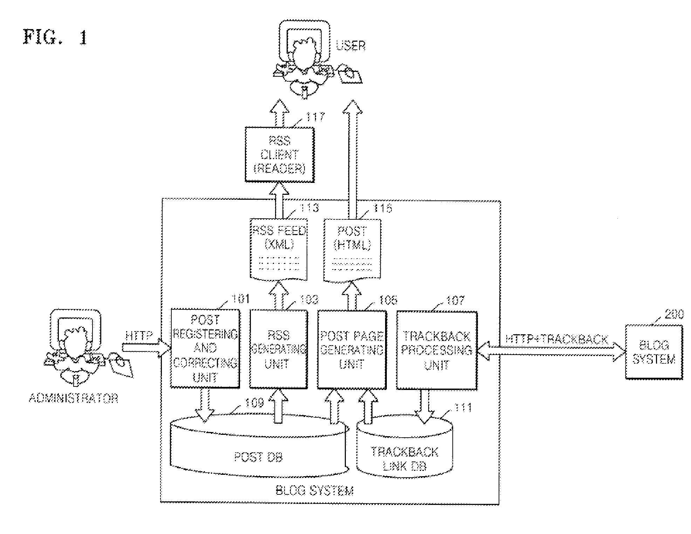

Figure 1 conceptually illustrates a method of sharing information using a blog. The existing blog system includes a post database 109 which stores a post of the blog, a post registering and correcting unit 101 which stores a post in the post database 109 and registers the post in the blog when a publisher prepares and transmits the post through a hyper text transport protocol (HTTP), a RSS generating unit 103 which generates a RSS document based on the registered post, a RSS feed document 113 which is a XML-format summary document for a newly registered post, a trackback processing unit 107 which processes a trackback ping for notifying that a post related to a specific post of another blog system 200 is registered, a trackback link database 111 which stores the trackback ping transmitted from the other blog system 200, a post page generating unit 105 which generates a HTML-format document which can be read by a user based on the content of the post database 109 and the trackback link database 111, and a RSS client reader 117 which automatically collects the RSS feed document 113 and displays the RSS feed document 113 to the user.

Such a blog system operates as follows:
When a blog administrator writes a new post and transmits the new post to the blog system through the HTTP, the post registering and correcting unit 101 stores the post transmitted through the HTTP in the post database 109. If the post newly registered by the administrator is related to the post which is previously registered in the other blog system 200, the trackback processing unit 107 sends a trackback ping message to a trackback processing unit of the other blog system 200 through the HTTP. The RSS generating unit 103 generates the RSS feed document 113 which is a XML-format summary document when the new post is registered in the post database 109. When a a user inputs a uniform resource locator (URL) of a specific post through a web browser, the post page generating unit 105 acquires a trackback from the post database 109, acquires a trackback link from the trackback link database 111, and generates and transmits a HTML document 115 which can be processed by the web browser. The RSS client reader 117 collects the RSS feed document 113 of the blog system having the registered URL and displays the RSS feed document 113 to the user. When a trackback ping, which indicates that a post related to a post previously registered in the post database 109 is written, is transmitted from the other blog system 200 to the trackback processing unit 107 through the HTTP, the trackback processing unit 107 stores the trackback ping in the trackback link database 111.

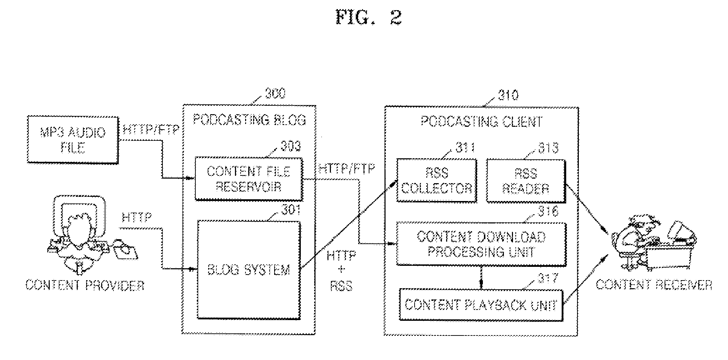

Figure 2 conceptually illustrates a podcasting system.

A podcasting system publishes multimedia content using the existing blog technology, and includes the existing blog system 301 illustrated in Figure 1, a content file reservoir 303 on a web server for storing a content file, and a podcasting client 310 (corresponding to the RSS client reader 117) which collects the RSS of a content blog and provides the RSS to a user, as shown in FIG. 2. The podcasting client 310 includes a content download processing unit 316 for additionally downloading content to the existing RSS reader 313 and a content playback unit 317 for playing the downloaded content. The RSS reader 313, which is a component of the podcasting client, is different from the existing RSS client reader 117 in that it supports RSS 2.0 which can display media file information included in a post.

The podcasting system operates as follows:
A content provider uploads a multimedia file such as MP3 to the content file reservoir 303 of the web server using a file transport protocol (FTP) or a HTTP. The content provider who uploads the content file writes a post for content and the content blog system 300 generates a RSS for a newly generated post by the operation of the blog system illustrated in FIG. 1. At this time, a RSS document according to RSS 2.0 is generated. The RSS document includes an <enclosure> tag for displaying information on the content included in the post. A RSS collector 311 of the podcasting client 310 collects the RSS document of the registered content blog. A RSS reader 313 extracts content information from the RSS document collected through the RSS collector 311 and displays the content information to a content receiver. When the content receiver selects content to be downloaded, a content download processing unit 316 extracts a content download URL from the collected RSS document and downloads the contents. The content receiver enjoys the downloaded content using a content playback unit 317.

The existing content blog using the podcasting system shares and publishes only the content file, but cannot share and publish metadata of the content when the web is used as a space for publishing the content. In other words, the terminal of a blog administrator, which operates in a local personal computer environment that is a publisher terminal, manages or retrieves the content based on the metadata of the content. However, since the blog administrator publishes only the content and does not publish the metadata when the content is published to the web through the blog, the metadata of the publisher terminal cannot be used by a remote content consumer or a content blog user.

Furthermore, when specific content is registered as a post of a blog and published to a web, new content referencing the content can be generated and the generated content includes usable metadata related to the post of the blog. Nevertheless, since the existing terminal or blog managing server of the blog administrator only publishes the post in a single direction, the blog administrator cannot obtain usable information related to the post, which the blog administrator himself/herself writes.

According to the present invention there is provided an apparatus and method as set forth in the appended claims. Preferred features of the invention will be apparent from the dependent claims, and the description which follows.

The present invention provides a method and apparatus for updating metadata stored in a publisher terminal through a rich site summary (RSS) when content and metadata are shared using a blog and information related to the content published through the blog is modified.

According to an aspect of an exemplary embodiment of the present invention, there is provided a method of publishing content through a blog on a web, including extracting metadata from the content; and transmitting the extracted metadata and the content to a web server for managing the blog to publish the metadata and the content in the blog. The method may further include receiving a message including information on the content from the web server; and updating the extracted metadata based on the information.

Here, the information may include at least one of various types of information generated by correction of a post of the content by a publisher, a click of the post by a visitor, an input of a reply for the post, or the receptionof a trackback ping transmitted from the other blog. The message may be a rich site summary (RSS) which represents summary information on the blog. The RSS may include the information in an <Enclosure> tag defined by the RSS 2.0 standard.

According to another aspect of an exemplary embodiment of the present invention, there is provided a computer-readable medium having embodied thereon a computer program for performing the method of publishing the content through the blog.

According to another aspect of an exemplary embodiment of the present invention, there is provided an apparatus for publishing content through a blog on a web, including a metadata extracting unit which extracts metadata from the content; and a transmitting unit which transmits the extracted metadata and the content to a web server for managing the blog to publish the metadata and the content in the blog. The apparatus may further include a receiving unit which receives a message including information on the content from the web server; and a metadata updating unit which updates the metadata extracted by the metadata extracting unit based on the information.

Here, the information may include at least one of various types of information generated by correction of a post of the content by a publisher, a click of the post by a visitor, an input of a reply for the post, or the reception of a trackback ping transmitted from the other blog. The message may be a rich site summary (RSS) which represents summary information on the blog. The RSS may include the updated metadata in an <Enclosure> tag defined by the RSS 2.0 standard.

According to another aspect of an exemplary embodiment of the present invention, there is provided a method of managing a blog on a web for publishing content, including receiving content and metadata of the content from a publisher terminal; registering the received content in the blog as a post of a publisher and generating a rich site summary (RSS) including the received metadata; and transmitting the generated RSS to a RSS client which has registered a RSS uniform resource locator (URL) of the blog. The method may further include updating the RSS based on information on the content; and transmitting the updated RSS to the publisher terminal.

The information may include at least one of various types of information generated by correction of a post of the content by a publisher, click of the post by a visitor, input of a reply for the post, reception of a trackback ping transmitted from the other blog. The RSS may include the information in an <Enclosure> tag defined by RSS 2.0 standard. The updated RSS may be included in an <Enclosure> tag defining the information in RSS 2.0 standard.

According to another aspect of an exemplary embodiment of the present invention, there is provided a computer-readable medium having embodied thereon a computer program for performing the method of managing the blog.

According to another aspect of an exemplary embodiment of the present invention, there is provided a web server apparatus for managing a blog on a web, including a receiving unit which receives content and metadata of the content from a publisher terminal; a registering unit which registers the received content in the blog as a post of a publisher; and a RSS processing unit which generates a rich site summary (RSS) including the received metadata and transmits the generated RSS to a RSS client which has registered a RSS uniform resource locator (URL) of the blog.

Here, the information may include at least one of various types of information generated by correction of a post of the content by a publisher, a click of the post by a visitor, an input of a reply for the post, or the reception of a trackback ping transmitted from the other blog. The RSS may include the information in an <Enclosure> tag defined by RSS 2.0 standard. The updated RSS may include the information in an <Enclosure> tag defined by RSS 2.0 standard.

The above and other features of the present invention will become more apparent by describing in detail exemplary embodiments thereof with reference to the attached drawings in which:
Figure 1 conceptually illustrates a method of sharing information using a blog;
Figure 2 conceptually illustrates a podcasting system;
Figure 3 conceptually illustrates a content sharing system according to an exemplary embodiment of the present invention;
Figure 4 is a flowchart illustrating a process of publishing content according to an exemplary embodiment of the present invention;
Figure 5 is a flowchart illustrating a process of updating metadata in a publisher terminal according to an exemplary embodiment of the present invention;
Figure 6 is a flowchart illustrating a process in which a RSS client downloads content from a blog managing server using metadata according to an exemplary embodiment of the present invention;
Figure 7 illustrates metadata of picture content represented in a XML format according to an exemplary embodiment of the present invention;
Figure 8 illustrates a table which represents items of metadata which can be added or corrected in a blog managing server;
Figure 9 illustrates a state that metadata is inserted into a RSS feed document in a XML format according to an exemplary embodiment of the present invention;
Figure 10 is a block diagram of a publisher terminal according to an exemplary embodiment of the present invention;
Figure 11 is a block diagram of a blog managing server according to an exemplary embodiment of the present invention; and
Figure 12 is a block diagram of a RSS client device according to an exemplary embodiment of the present invention.

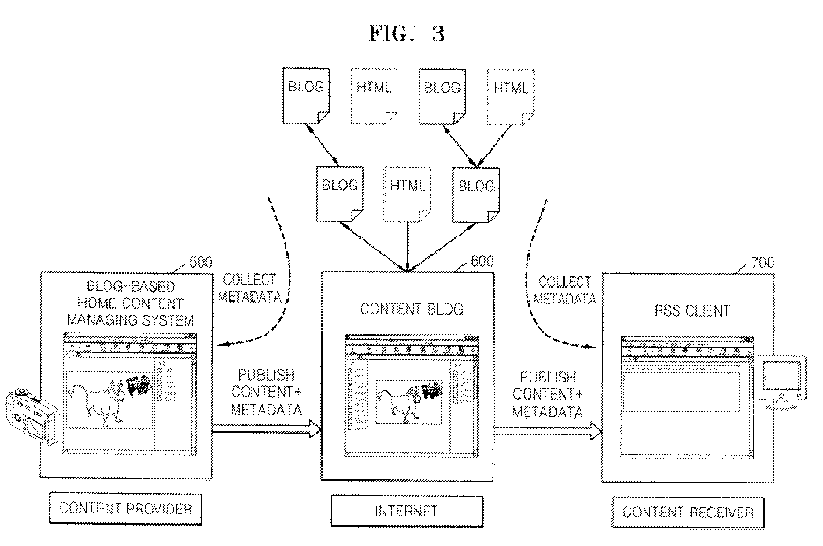

Figure 3 conceptually illustrates a content sharing system according to an exemplary embodiment of the present invention.

As shown in Figure 3, a blog administrator, that is, a content provider, publishes metadata together with content to a blog, and a rich site summary (RSS) client, that is, a content receiver, receives the content and the metadata from the blog using a RSS. Accordingly, the content receiver uses the metadata in retrieving the content to be downloaded.

When the administrator corrects a post published on the blog or the other blog references the post and transmits a trackback ping, new information related to the published content may be generated and become an item of new metadata of the content. Since this information is transmitted to the content provider and the content receiver using the RSS, the metadata can be synthesized.

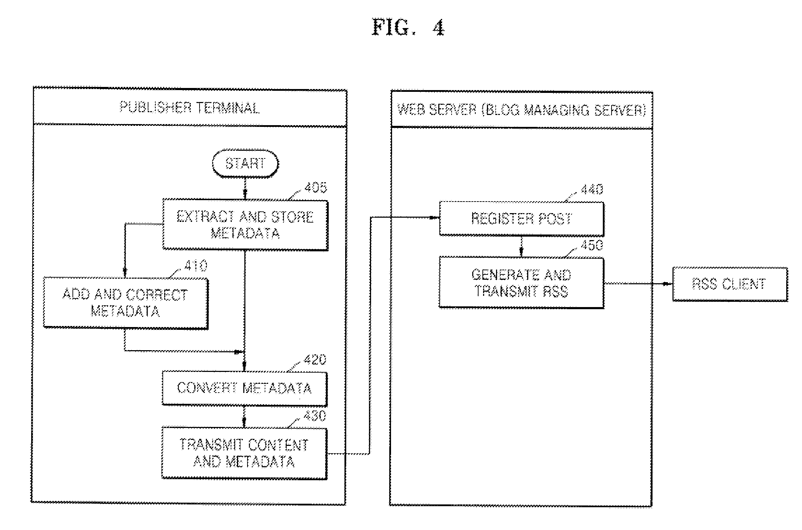

Figure 4 is a flowchart illustrating a process of publishing multimedia content according to an exemplary embodiment of the present invention.

The blog administrator extracts the metadata from content to be uploaded to a blog in the content stored in his/her own terminal (hereinafter, referred to as publisher terminal) and stores the metadata in a metadata database (405). At this time, publisher can add new information to the metadata or correct the metadata (410). Before the extracted metadata is transmitted to a blog managing server (hereinafter, referred to as web server), the extracted metadata is converted into an adequate format which can be registered in the post of the blog by the web server (420). Such a conversion may also be performed in the web server. In this case, the converting operation may be omitted.

The publisher terminal transmits the content and the metadata to be published to the web server (430).

The web server registers the received content and metadata as a post (440), generates a RSS including the metadata, and transmits the RSS to a RSS client which registers the RSS URL of the blog (450). Accordingly, the RSS client can acquire the metadata related to the content published in the blog. When the content is registered in the blog, a post URL of the content is stored in the publisher terminal as a publish URL and relationship between local content and content published in the blog can be maintained. When a RSS feed document is received from the web server, the metadata corresponding to the RSS feed document can be searched and updated using the publish URL. The update of the metadata will be described later.

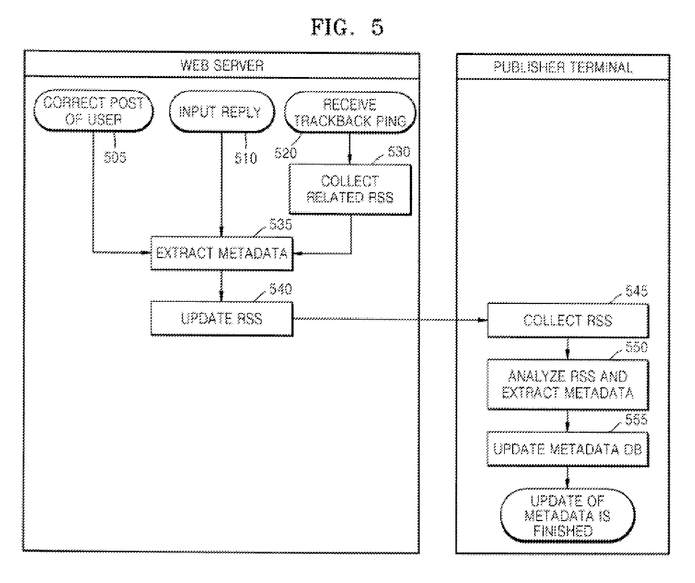

Figure 5 is a flowchart illustrating a process of updating metadata in a publisher terminal according to an embodiment of the present invention.

When a post registered in the blog is corrected by the blog administrator (505), a reply for the post is input by a third person clicking the post (510), or a trackback ping transmitted from the other blog with reference to the post is received (520), this information related to the post may be the metadata for the published content. Accordingly, the web server extracts information to be used as the metadata from the several pieces of information (535) and updates the RSS based on the extracted information (540). The RSS 2.0 format includes an <Enclosure> tag representing the information of the content and the extracted item may be inserted into the <Enclosure> tag in a XML format.

The publisher terminal periodically collects the RSS (545), analyzes the collected RSS, extracts metadata from the collected RSS, and updates a metadata database based on the metadata included in the updated RSS. In other words, when information on the content published in the blog is generated for several reasons, that is, when an item to be added to the metadata or to be corrected is generated, the web server transmits the RSS including the information to be added or corrected to the publisher terminal. Thus, the metadata of the content published in the blog and the metadata of the local content stored in the publisher terminal can be synchronized and the blog administrator can easily obtain various types of metadata generated by the content which the blog administrator himself/herself publishes.

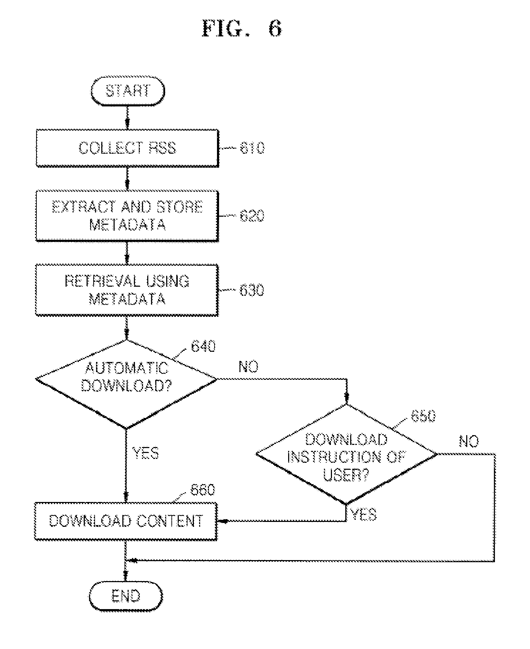

Figure 6 is a flowchart illustrating a process in which a RSS client downloads content from a blog managing server using metadata according to an exemplary embodiment of the present invention.

The RSS client collects a RSS from a blog corresponding to a RSS URL which the RSS client himself/herself registers (610). As mentioned above, since the RSS includes the metadata of the published content, the metadata is extracted from the collected RSS and stored (620). The RSS client retrieves content to be downloaded using the extracted metadata (630) and downloads the retrieved content (660). The retrieved content may be downloaded by a download instruction of a user (650) or automatically downloaded (640) according to the setting of the RSS client. Thus, the RSS client can efficiently retrieve the content through the retrieval based on the metadata and selectively download the content.

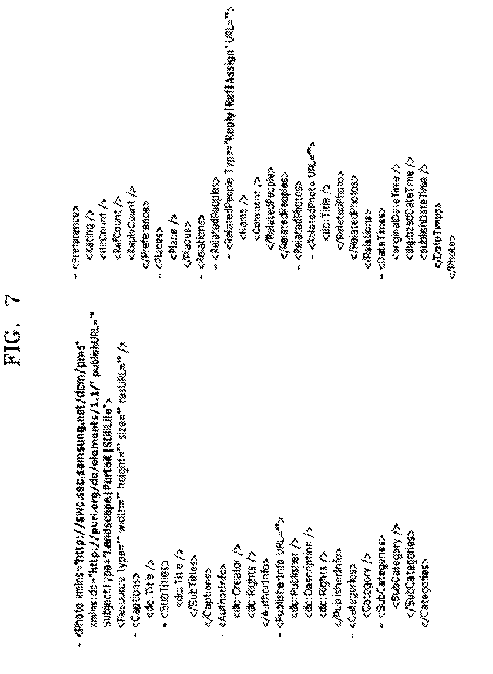

Figure 7 illustrates metadata of picture content represented in a XML format according to an exemplary embodiment of the present invention.

Various types of information such as a title, an author, a publisher, a category, related people, and a reply may be the metadata for the content. The metadata may be written in a XML format and included in the RSS. In addition to the information illustrated in Figure 7, the items which may be included in the metadata may vary.

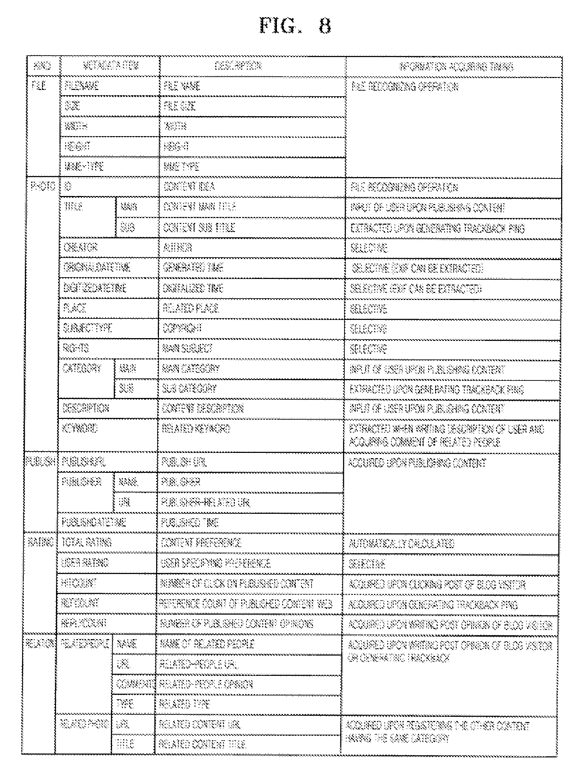

Figure 8 illustrates a table which represents items of metadata which can be added or corrected in a blog managing server. In other words, information on the content file which can be recognized by the web server when the content is published in the blog, such as a file name and a file size, information generated by the input or the setting of a user, such as an author, a related place, and a category, and reference count information obtained by a publish URL which is the URL of a post, the number of clicks on content, a reply or a trackback ping may become the metadata of the published content. The items illustrated in Figure 8 are only examples of the information which may become the metadata, but the exemplary embodiments are not limited to these examples.

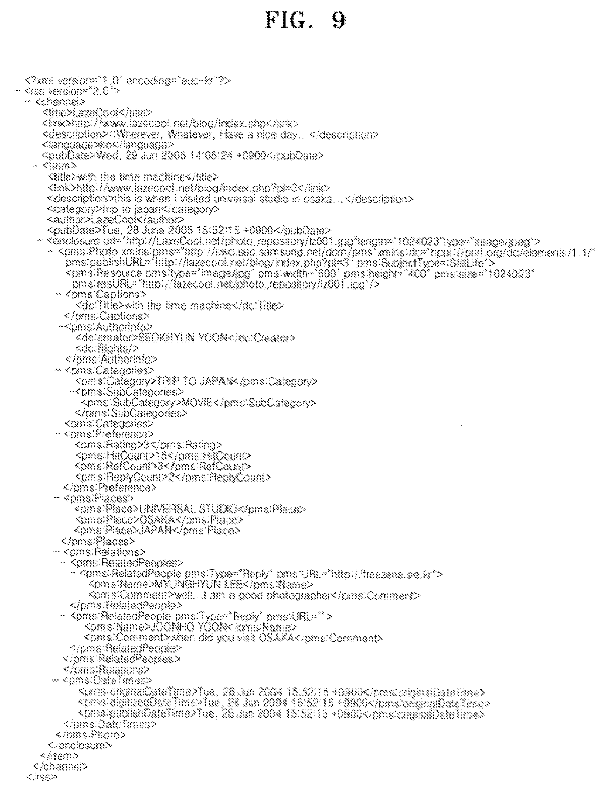

Figure 9 illustrates a state that metadata is inserted into a RSS feed document in a XML format according to an exemplary embodiment of the present invention.

Referring to Figure 9, various types of information such as a title, an author, a related place of the content are included in a XML format. According to the present exemplary embodiment, the metadata is positioned in the <Enclosure> tag defined in RSS 2.0. In other words, the <Enclosure> tag includes basic information on the content. In the present exemplary embodiment, the metadata is included in the <Enclosure> tag. In addition, the metadata may be included in another tag.

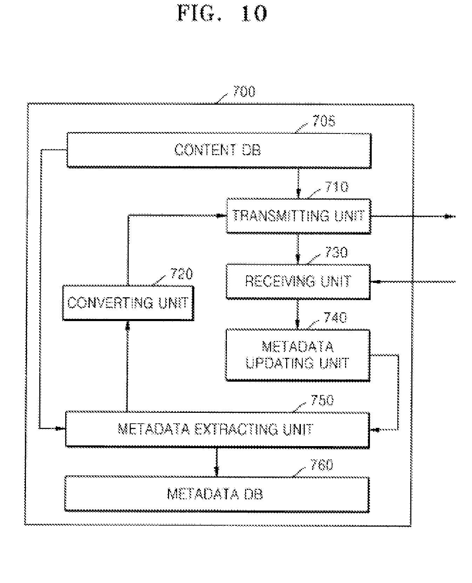

Figure 10 is a block diagram of a publisher terminal according to an exemplary embodiment of the present invention.

As shown in Figure. 10, the publisher terminal 700 according to the present exemplary embodiment includes a content database 705, a transmitting unit 710, a converting unit 720, a receiving unit 730, a metadata updating unit 740, a metadata extracting unit 750, and a metadata database 760.

The content database 705 stores multimedia content, and the metadata extracting unit 750 extracts metadata from content to be published in a blog from the content stored in the content database 705. The metadata database 760 stores the metadata extracted from the metadata extracting unit 750. The converting unit 720 converts the metadata extracted from the metadata extracting unit 750 into an adequate format which can be registered as a post of the blog by a web server. As mentioned above, the converting unit 720 may be omitted.

The transmitting unit 710 transmits the content and the metadata of the content through the HTTP or the FTP to the web server to publish the content and the metadata to the blog.

The receiving unit 730 receives an updated RSS from the web server. The RSS received by the receiving unit 730 includes new information on the content published in the blog as mentioned above, the metadata updating unit 740 updates the metadata stored in the metadata database 760 based on the received RSS.

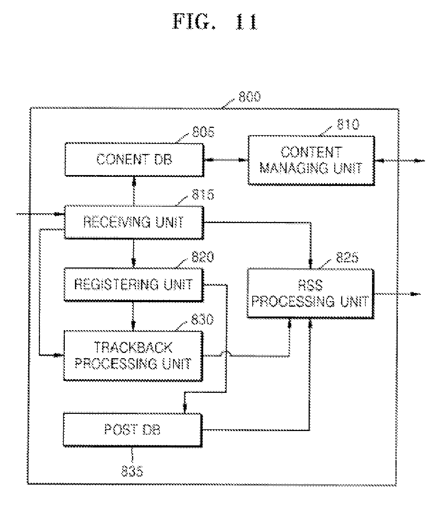

Figure 11 is a block diagram of a web server according to an exemplary embodiment of the present invention.

As shown in Figure 11, the web server 800 according to the present exemplary embodiment includes a content database 805, a content managing unit 810, a receiving unit 815, a registering unit 820, a RSS processing unit 825, a trackback processing unit 830, and a post database 835.

The receiving unit 815 receives content and metadata from a publisher terminal and receives a trackback ping transmitted from another blog. The trackback processing unit 830 extracts information to be used as the metadata of the content, such as a reference URL, from the trackback ping received by the receiving unit 815. The extracted information is sent to the registering unit 820 to be used for correcting the content of the post by the registering unit 820 and is transmitted to the RSS processing unit 825 to be used for updating the RSS. The post database 835 stores information on a post in the blog. The post database 835 may store the trackback ping as well as the metadata of the content.

The registering unit 820 generates a post based on the received content, the metadata, and the trackback ping and registers the post in the blog. When the metadata, which is not converted into an adequate format registered as a post of the blog, is transmitted from the publisher terminal, conversion is performed by the registering unit 820.

The content database 805 stores the content received from the post terminal 700, and the content managing unit 810 receives a content request from a RSS client, extracts desired content from the content database 805, and transmits the content to the RSS client.

The RSS managing unit 825 generates a RSS based on the received metadata and transmits the RSS to the RSS client, when the content and the metadata are received from the post terminal 700 and are registered in the blog. When new information on the published content is generated, the RSS is updated using the new information and the updated RSS is provided to the post terminal 700 such that the post terminal 700 can update the metadata. It goes without saying that the updated RSS is transmitted to every RSS client in addition to the post terminal 700.

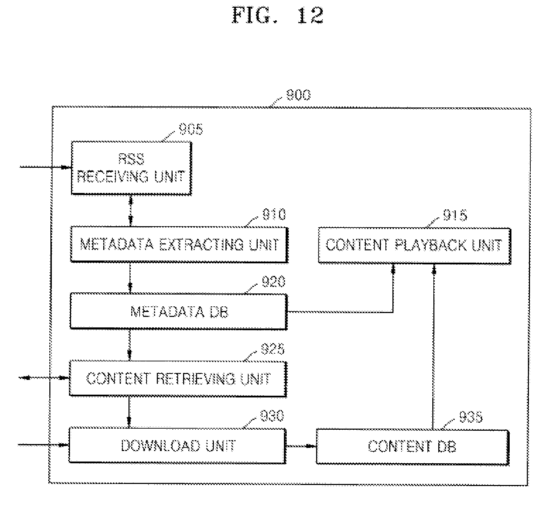

Figure 12 is a block diagram of a RSS client device according to an exemplary embodiment of the present invention.

As shown in Figure 12, the RSS client according to the present exemplary embodiment includes a receiving unit 905, a metadata extracting unit 910, a content playback unit 915, a metadata database 920, a content retrieving unit 925, a download unit 930, and a content database 935.

The receiving unit 905 receives a RSS from the web server 800, and the metadata extracting unit 910 extracts metadata from the received RSS. The metadata database 920 stores the metadata extracted by the metadata extracting unit 910. The content retrieving unit 925 retrieves a content to be downloaded from a web server using the metadata stored in the metadata database 920, and the download unit 930 downloads the content retrieved by the content retrieving unit 925 automatically or according to the input of a user. The content database 935 stores the content downloaded by the download unit 930, and the content playback unit 915 provides information on the content to a user using the content stored in the content database 935 and the metadata stored in the metadata database 920.

The exemplary embodiments of the present invention can be written as computer programs and can be implemented in general-use digital computers that execute the programs using a computer readable recording medium. Examples of the computer readable recording medium include magnetic storage media (e.g., ROM, floppy disks, hard disks, etc.), optical recording media (e.g., CD-ROMs, or DVDs), and storage media such as carrier waves (e.g., transmission through the Internet).

According to the exemplary embodiments of the present invention, since a content media file and a metadata thereof can be published in a blog, a RSS client may acquire the metadata related to the content published in the blog and the content can be efficiently retrieved based on the metadata.

In addition, when the metadata is generated or corrected by the existing blog operations such as the correction of a post of a content published in a blog by a administrator, the click of the post and input of a reply by a visitor, and the generation of a related post by referring to a trackback web, a web server may generate a RSS based on the metadata and transmits the RSS to a publisher terminal and a RSS client, thus, metadata of a local content and metadata of a content registered in the blog can be synchronized.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of publishing content through a blog on a web, comprising:
extracting metadata from the content; and
transmitting the extracted metadata and the content to a web server for managing the blog to publish the metadata and the content in the blog.

2. The method of claim 1, further comprising:
receiving a message including information on the content from the web server; and
updating the extracted metadata based on the information.

3. The method of claim 2, wherein the information includes at least one of various types of information generated by modification of a post of the content by a publisher, click of the post by a visitor, input of a reply for the post, and reception of a trackback ping transmitted from another blog.

4. The method of claim 2, wherein the message is a rich site summary (RSS) which represents summary information on the blog.

5. The method of claim 4, wherein the RSS includes the information in an <Enclosure> tag defined by a RSS 2.0 standard.

6. A computer-readable medium having embodied thereon a computer program for performing the method of any of claims 1 to 5.

7. An apparatus (700) for publishing content through a blog on a web, comprising:
a metadata extracting unit (750) which extracts metadata from the content; and
a transmitting unit (710) which transmits the extracted metadata and the content to a web server (800) for managing the blog to publish the metadata and the content in the blog.

8. The apparatus (700) of claim 7, further comprising:
a receiving unit (730) which receives a message including information on the content from the web server (800); and
a metadata updating unit (740) which updates the metadata extracted by the metadata extracting unit (750) based on the information.

9. The apparatus of claim 8, wherein the information includes at least one of various types of information generated by modification of a post of the content by a publisher, click of the post by a visitor, input of a reply for the post, and reception of a trackback ping transmitted from another blog.

10. The apparatus of claim 8, wherein the message is a rich site summary (RSS) which represents summary information on the blog.

11. The apparatus of claim 10, wherein the RSS includes the updated metadata in an <Enclosure> tag defined by a RSS 2.0 standard.

12. A method of managing a blog on a web for publishing content, comprising:
receiving content and metadata of the content from a publisher terminal (700);
registering the received content in the blog as a post of a publisher and generating a rich site summary (RSS) including the received metadata; and
transmitting the generated RSS to a RSS client (900) which has registered a RSS uniform resource locator (URL) of the blog.

13. The method of claim 12, further comprising:
updating the RSS based on information on the content; and
transmitting the updated RSS to the publisher terminal (700).

14. The method of claim 13, further comprising transmitting the updated RSS to the RSS client (900) which has registered the RSS URL of the blog.

15. The method of claim 13, wherein the information includes at least one of various types of information generated by modification of a post of the content by a publisher, click of the post by a visitor, input of a reply for the post, and reception of a trackback ping transmitted from another blog.

16. The method of claim 12, wherein the RSS includes the metadata in an <Enclosure> tag defined by a RSS 2.0 standard.

17. The method of claim 13, wherein the updated RSS includes the information in an <Enclosure> tag defined by a RSS 2.0 standard.

18. A computer-readable medium having embodied thereon a computer program for performing the method of any of claims 12 to 17.

19. A web server apparatus (800) for managing a blog on a web, comprising:
a receiving unit (815) which receives content and metadata of the content from a published terminal (700);
a registering unit (820) which registers the received content in the blog as a post of a publisher; and
a RSS processing unit (825) which generates a rich site summary (RSS) including the received metadata and transmits the generated RSS to a RSS client (900) which has registered a RSS uniform resource locator (URL) of the blog.

20. The apparatus of claim 19, wherein the RSS processing unit (825) updates the RSS based on information on the content and transmits the updated RSS to the publisher terminal (700).

21. The apparatus of claim 20, wherein the RSS processing unit (825) transmits the updated RSS to the RSS client (900) which has registered the RSS URL of the blog.

22. The apparatus of claim 20, wherein the information includes at least one of various types of information generated by modification of a post of the content by a publisher, click of the post by a visitor, input of a reply for the post, and reception of a trackback ping transmitted from another blog.

23. The apparatus of claim 19, wherein the RSS includes the metadata in an <Enclosure> tag defined by a RSS 2.0 standard.

24. The apparatus of claim 20, wherein the updated RSS includes the information in an <Enclosure> tag defined by a RSS 2.0 standard.

25. The apparatus of claim 21, wherein the updated RSS includes the information in an <Enclosure> tag defined by a RSS 2.0 standard.

26. A method of receiving content from a web server (800) for managing a blog on a web;
receiving a rich site summary (RSS) of the blog from the web server (800);
extracting metadata included in the received RSS;
retrieving the content to be downloaded using the extracted metadata; and
downloading at least a portion of the retrieved content.

27. The method of claim 26, wherein the RSS includes the metadata in an <Enclosure> tag defined by a RSS 2.0 standard.

28. A computer-readable medium having embodied thereon a computer program for performing the method according to claim 26 or 27.

29. A RSS client device (900) for receiving multimedia content from a web server (800) for managing a blog on a web;
a RSS receiving unit (905) which receives a rich site summary (RSS) of the blog from the web server (800);
a metadata extracting unit (910) which extracts metadata included in the received RSS;
a content retrieving unit (925) which retrieves the content to be downloaded using the extracted metadata; and
a downloading unit (930) which downloads at least a portion of the retrieved content.

30. The device of claim 29, wherein the RSS includes the metadata in an <Enclosure> tag defined by a RSS 2.0 standard.
